# FASCICULE DE BREVET EUROPEEN

(11) **EP 3 033 750 B1**
(45) Date de publication et mention de la délivrance du brevet: **06.09.2017**
(21) Numéro de dépôt: 14750730.5
(22) Date de dépôt: 13.08.2014
(51) Int. Cl.: G21F 5/08, G21F 5/14, B61D 3/16, B60P 7/12

(54) **ENSEMBLE COMPRENANT UN EMBALLAGE DE TRANSPORT DE MATIERES RADIOACTIVES ET UN CHASSIS DE SUPPORT DE L'EMBALLAGE**
ANORDNUNG MIT EINER VERPACKUNG ZUM TRANSPORT VON RADIOAKTIVEN STOFFEN UND CHASSIS ZUR UNTERSTÜTZUNG DER VERPACKUNG
ASSEMBLY COMPRISING A PACKAGE FOR TRANSPORTING RADIOACTIVE SUBSTANCES AND A CHASSIS FOR SUPPORTING THE PACKAGE

(30) Priorité: 14.08.2013 FR 1358028
(43) Date de publication de la demande: 22.06.2016
(73) Titulaire: TN International, 78182 Montigny Le Bretonneux (FR)
(72) Inventeur: AUDREN, Alexandre, F-30290 Laudun (FR); VIALLON, Lilian, F-84500 Bollène (FR)
(74) Mandataire: Brevalex
(86) Numéro de dépôt international: PCT/EP2014/067308
(87) Numéro de publication internationale: WO 2015/022353

(56) Documents cités:
- FR-A1- 2 846 778
- FR-A1- 2 971 491
- US-A- 4 861 205
- US-A- 5 841 147

## Description

### DOMAINE TECHNIQUE

La présente invention se rapporte au domaine du transport de matières radioactives. Elle concerne plus particulièrement un ensemble comprenant un emballage de transport de matières radioactives et un châssis de support de l'emballage, le châssis étant généralement destiné à être fixé sur un véhicule de transport.

### ÉTAT DE LA TECHNIQUE ANTÉRIEURE

Un emballage de transport de matières radioactives présente habituellement un corps latéral, un fond et un couvercle. Ces parties de l'emballage définissent une cavité de logement des matières radioactives, par exemple des assemblages de combustible nucléaire ou des étuis de déchets. De plus, un panier peut être agencé au sein de la cavité de logement pour définir des compartiments dans lesquels sont placés les différents étuis/assemblages.

Pour le transport de l'emballage entre différents sites, ce dernier est placé sur un véhicule de transport, par exemple un véhicule automobile de transport routier. Pour ce faire, le véhicule présente habituellement une plateforme recevant un châssis supportant l'emballage. L'ensemble formé par le châssis et l'emballage peut être mis en place et monté sur la plateforme du véhicule, ce dernier assurant ensuite le transport. A l'arrivée sur site, l'ensemble peut être retiré de la plateforme du véhicule, mais plus généralement, seul l'emballage est retiré car le châssis reste sur le véhicule.

La démonstration de sûreté de l'emballage se fonde en particulier sur des épreuves réglementaires de chute comme la chute libre ou la chute sur poinçon, avec l'emballage chargé ou non des matières radioactives, le cas le plus défavorable devant être retenu. Aussi, les emballages sont conçus pour répondre à ces exigences nécessaires à leur certification.

Mais certains emballages doivent également être conçus de manière à répondre aux différents règlements de transport de matières radioactives, en s'assurant notamment qu'en cas de chute d'un ensemble comprenant le châssis et son emballage, la sûreté de ce dernier ne soit pas réduite.

Or en cas de chute de cet ensemble selon une direction de superposition de l'emballage sur son châssis, avec le châssis orienté vers l'avant, les risques d'endommagement de l'emballage par le châssis sont élevés. Pour répondre à cette contrainte, il peut être prévu un dimensionnement très important de l'emballage pour résister aux efforts transmis par le châssis en cas de chute, et limiter les risques d'endommagement qui pourraient nuire à la sûreté de l'emballage. Néanmoins, un tel surdimensionnement pourrait s'avérer incompatible avec les contraintes d'exploitation. Le document US5841147A divulgue un ensemble comportant un emballage de transport de matières radioactives, ainsi qu'un châssis de support de cet emballage, selon le préambule de la revendication 1.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un ensemble comprenant un emballage de transport de matières radioactives ainsi qu'un châssis de support de l'emballage, le châssis comportant :
- une première partie ;
- une seconde partie solidaire de l'emballage, l'emballage et cette seconde partie formant une entité.

De plus, la première partie et la seconde partie du châssis sont raccordées entre elles par un ou plusieurs éléments fusibles mécaniques de manière à assurer le maintien de l'une par rapport à l'autre selon une première direction de superposition de l'emballage sur son châssis,
et l'ensemble est conçu de manière à ce qu'une chute de l'ensemble selon ladite première direction avec la première partie du châssis orientée vers l'avant selon cette première direction, entraîne une rupture desdits éléments fusibles mécaniques permettant un déplacement de ladite entité relativement à ladite première partie, selon ladite première direction.

Aussi, en prévoyant cette possibilité pour ladite entité de se déplacer relativement à la première partie du châssis selon la première direction, après rupture des éléments fusibles mécaniques, les risques d'endommagement de l'emballage par le châssis sont considérablement réduits. En d'autres termes, l'invention est avantageuse en ce qu'elle permet de présenter un emballage répondant aux exigences de sûreté sans pour autant être surdimensionné, ce qui facilite son exploitation.

De plus, en prévoyant une telle désolidarisation partielle ou totale entre la première partie du châssis et l'entité, suite à la rupture des éléments fusibles, il devient possible d'utiliser la démonstration de sûreté de l'emballage en chute sans le châssis, pour démontrer la sûreté de l'emballage en chute avec ce même châssis.

Il est indiqué que le déplacement relatif désiré entre la première partie du châssis et l'entité peut être une translation selon ladite première direction, ou tout autre mouvement, simple ou composé, conduisant à une modification de la position relative entre la première partie du châssis et l'entité, dans ladite première direction.

De préférence, les première et seconde parties du châssis sont équipées de moyens de guidage permettant, au moins pendant une partie dudit déplacement relatif, de guider ladite entité relativement à la première partie selon ladite première direction.

Ces moyens de guidage confèrent ainsi une direction privilégiée de déplacement relatif, cette direction étant déterminée de façon à ce que les risques d'agression de l'emballage par d'autres parties du châssis soient limités au maximum. Le guidage est préférentiellement actif dès le début dudit déplacement relatif entre l'entité et la première partie du châssis, après rupture des éléments fusibles mécaniques, et encore plus préférentiellement actif au cours de la rupture des éléments fusibles mécaniques.

Néanmoins, d'autres directions privilégiées de déplacement relatif peuvent être adoptées, sans sortir du cadre de l'invention, toujours de manière à engendrer une modification de la position relative entre la première partie du châssis et l'entité, dans ladite première direction.

Il est indiqué que lesdits moyens de guidage comprennent préférentiellement un ou plusieurs rails, de préférence traversés par le/les éléments fusibles mécaniques avant leur rupture. Ces rails peuvent par exemple être réalisés au sein de montants ou à l'aide de chapes.

De préférence, ledit emballage comporte des moyens amortisseurs, préférentiellement des capots amortisseurs agencés aux extrémités de l'emballage. De plus, l'ensemble est conçu de sorte que lors de ladite chute sur une surface d'impact plane orthogonale à ladite première direction, ladite rupture de chaque élément fusible mécanique se produise avant le contact des moyens amortisseurs avec la surface d'impact.

Alternativement, il est possible de prévoir une configuration conduisant à la rupture des éléments fusibles en même temps que le début de l'écrasement des capots.

De préférence, chaque élément fusible mécanique prend la forme d'un organe de cisaillement, de préférence équipé d'une portion affaiblie mécaniquement.

Par exemple, cette portion affaiblie mécaniquement peut être une section réduite d'un pion de cisaillement, comme une gorge, qui permet de former une zone d'amorce de rupture.

Il est noté que les éléments fusibles mécaniques pourraient être rapportés sur les première et seconde parties du châssis, ou bien faire partie intégrante de l'une de ces deux parties. Il pourrait encore s'agir d'une partie affaiblie mécaniquement agencée entre deux portions réalisées d'une seule pièce avec cette partie affaiblie mécaniquement, lesdites deux portions appartenant respectivement aux première et seconde parties du châssis.

De préférence, l'ensemble est conçu de sorte qu'après rupture de chaque élément fusible mécanique, ladite entité est libre relativement à la première partie du châssis.

Cela permet de limiter au maximum les risques d'endommagement de l'emballage par le châssis. A cet égard, il est préférentiellement prévu que durant toute la chute, après rupture des éléments fusibles, ladite entité reste libre relativement à la première partie du châssis. En d'autres termes, il est préférentiellement fait en sorte que l'entité puisse se déplacer relativement à la première partie sans que ce déplacement ne soit gêné par une quelconque pièce du châssis.

Comme cela a déjà été évoqué, cette liberté de mouvement peut par exemple être restreinte à une libre translation de l'entité relativement à la première partie du châssis, selon ladite première direction.

Alternativement, l'ensemble peut être conçu de sorte qu'après rupture de chaque élément fusible mécanique, ladite entité reste reliée à la première partie du châssis par un ou plusieurs éléments de raccord déformables plastiquement au cours dudit déplacement relatif.

Ces éléments de raccord déformables contribuent au maintien mécanique de l'entité sur la première partie du châssis, en conditions normales de transport. Ils sont seulement prévus pour se déformer en cas de chute, après rupture des éléments fusibles mécaniques.

De préférence, c'est la seconde partie du châssis qui est reliée à la première partie par cet/ces éléments de raccord déformables plastiquement.

De préférence, ladite première partie du châssis comporte des montants, de préférence en forme de rails et s'étendant de préférence longitudinalement selon ladite première direction.

De préférence, lesdits montants sont au nombre de quatre, reliés deux à deux par des moyens de renfort mécanique cheminant le long du corps de l'emballage.

De préférence, ladite seconde partie de châssis comporte deux structures, de préférence annulaires, entourant un corps de l'emballage.

Préférentiellement, chaque structure est formée à l'aide de deux parties démontables, s'étendant chacune sur sensiblement 180°.

De préférence, chacune des deux parties démontables est sensiblement semi-circulaire, de manière à former des structures sensiblement annulaires. Alternativement, au moins l'une des deux parties démontables de chaque structure présente une forme globale en U, de manière à ce que les branches du U servent au guidage en translation de l'entité relativement à la première partie du châssis, selon la première direction et après rupture des éléments fusibles mécaniques. Pour ce faire, les branches du U sont préférentiellement orientées selon ladite première direction.

Les structures précitées sont préférentiellement agencées dans des plans parallèles à la première direction.

De plus, les deux structures sont préférentiellement montées guidées en translation selon ladite première direction sur lesdits montants en forme de rails, le maintien des deux structures sur lesdits montants étant assuré par les éléments fusibles mécaniques.

Aussi, c'est en cas de rupture de ces éléments fusibles, suite à une chute, que les rails guident en translation les structures selon la première direction.

Selon un autre mode de réalisation, la seconde partie du châssis comporte plusieurs structures qui n'entourent plus le corps de l'emballage, mais qui entourent chacune un tourillon de manutention équipant ce corps d'emballage, en assurant ainsi la solidarisation du corps d'emballage avec ladite seconde partie du châssis. Dans ce cas de figure, ces structures entourant les tourillons peuvent éventuellement être montées guidées en translation selon ladite première direction sur des montants en forme de rails, même s'il ne s'agit pas du mode de réalisation préféré. Le maintien de ces structures sur lesdits montants est assuré par les éléments fusibles mécaniques.

Enfin, l'invention a pour objet un véhicule de transport de matières radioactives équipé d'un ensemble tel que décrit ci-dessus, le véhicule comprenant une plateforme de fixation de l'ensemble superposé sur ladite plateforme selon ladite première direction, avec la première partie du châssis fixée sur ladite plateforme.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un ensemble selon un mode de réalisation préféré de l'invention, intégrant un emballage de transport de matières radioactives et son châssis de support ;
- la figure 2 est une vue de côté de l'ensemble montré sur la figure précédente, agencé sur un véhicule de transport de matières radioactives ;
- la figure 3 est une vue en perspective du châssis de transport appartenant à l'ensemble montré sur la figure précédente ;
- la figure 4 représente une vue de face du châssis montré sur la figure précédente ;
- la figure 5 est une vue en coupe d'une partie du châssis montré sur la figure précédente ;
- la figure 6 est une vue de dessus du châssis montré sur les figures 3 et 4 ;
- la figure 7 est une vue similaire à celle de la figure 4, avec l'ensemble représenté dans un état tel qu'observé durant une chute sur une surface d'impact avant l'écrasement des capots, le capot de tête ayant été retiré et laissant apparaître le couvercle de l'emballage ;
- la figure 8 est une vue similaire à celle de la figure 4, avec l'ensemble représenté dans un état tel qu'observé durant une chute sur une surface d'impact, après l'écrasement des capots ;
- la figure 9 est une vue similaire à celle de la figure 5, avec l'ensemble représenté dans le même état que celui de la figure 8 ;
- la figure 10 est une vue similaire à celle de la figure 7, avec l'ensemble se présentant selon une alternative de réalisation, cette figure correspondant également à une vue en coupe prise le long de la ligne X-X de la figure 11 ;
- la figure 11 est une vue de dessus d'une partie de l'ensemble montré sur la figure précédente ;
- la figure 12 représente une vue en coupe d'une partie d'un ensemble selon un autre mode de réalisation préféré de l'invention, intégrant un emballage de transport de matières radioactives et son châssis de support ;
- la figure 13 est une vue de dessus d'une partie de l'ensemble montré sur la figure précédente ; et
- la figure 14 est une vue similaire à celle de la figure 12, avec l'ensemble se présentant selon une alternative de réalisation.

### EXPOSÉ DÉTAILLÉ DE MODES DE RÉALISATION PARTICULIERS

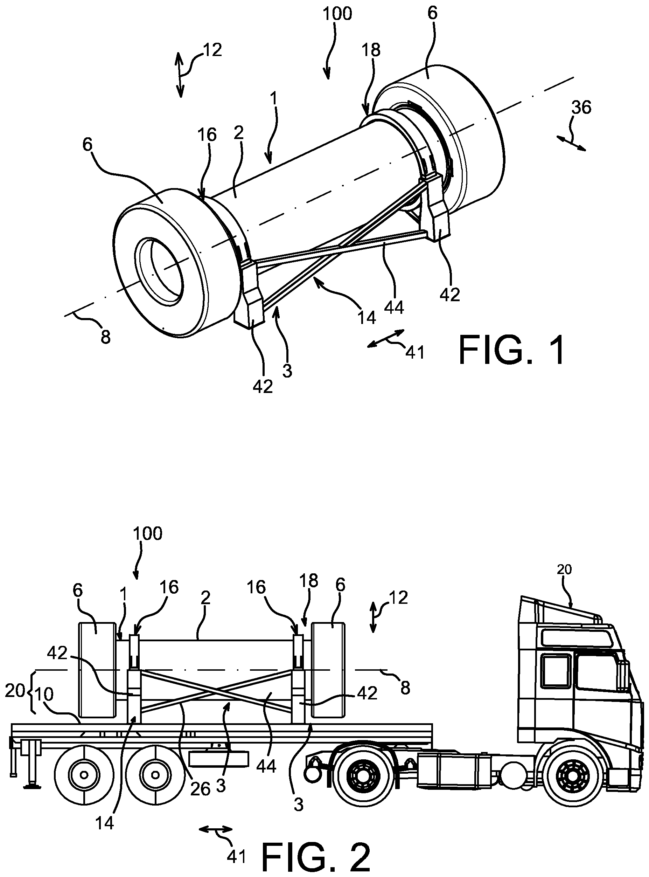

En référence tout d'abord à la figure 1, il est représenté un ensemble 100 selon un mode de réalisation préféré de l'invention, cet ensemble 100 comprenant un emballage 1 pour le transport de matières radioactives, ainsi qu'un châssis de support 3 supportant l'emballage.

L'emballage 1 est pourvu d'un corps latéral 2, d'un fond et d'un couvercle obturant une ouverture de l'emballage opposée au fond. Sur la figure 1, le fond et le couvercle ne sont pas visibles car ils sont recouverts respectivement par deux capots amortisseurs de chocs 6 montés aux extrémités du corps d'emballage. L'emballage présente un axe longitudinal 8 centré par rapport au corps latéral 2, et traversant le couvercle ainsi que le fond de ce même emballage. L'axe 8 est agencé sensiblement parallèlement au châssis 3, et encore plus précisément agencé parallèlement à une plateforme 10 d'un véhicule de transport routier de matières radioactives 20 montré sur la figure 2, le châssis 3 étant fixé à la plateforme 10. A cet égard, il est noté que l'ensemble 100 est superposé à la plateforme 10 selon une première direction 12 correspondant à la direction verticale. C'est également selon cette première direction 12 que l'emballage 1 est superposé sur le châssis 3.

De manière conventionnelle, l'emballage forme une enveloppe extérieure d'un colis et définit une cavité servant au logement des matières radioactives, et éventuellement d'un panier de rangement. Les matières radioactives peuvent par exemple être des étuis de déchets, ou encore des assemblages de combustible nucléaire.

Le châssis 3 présente la particularité d'être scindé en deux parties distinctes, à savoir une première partie 14 et une seconde partie 16 solidaire de l'emballage, l'emballage et cette seconde partie formant une entité 18.

Toujours en référence aux figures 1 et 2, la première partie 14 comporte quatre montants 42 parallèles entre eux et orthogonaux à la plateforme 10 du véhicule, sur laquelle ils sont fixés, par exemple par boulons ou moyens similaires. Les montants 42, qui s'étendent donc selon la première direction 12, sont répartis aux quatre coins d'un rectangle fictif, et reliés deux à deux par des moyens de renfort mécanique du type armatures 44 ou similaires. Ces armatures s'étendent selon la direction longitudinale 41 en cheminant le long du corps de l'emballage, et relient donc deux à deux les montants 42 qui sont espacés selon cette même direction 41. Entre les quatre montants et les armatures 44, il est défini un espace vide 26 en forme globale de parallélépipède rectangle, à travers lequel l'entité 18 est destinée à se déplacer en cas de chute, comme cela sera détaillé ci-après.

La seconde partie 16 du châssis 3 comprend quant à elle deux structures annulaires 46, entourant le corps 2 de l'emballage. Ces deux structures 46, centrées sur l'axe 8 et respectivement disposées à proximité des extrémités du corps 2, assurent la solidarisation de l'emballage 1 sur la seconde partie de châssis 16, selon les trois directions 12, 36, 41.

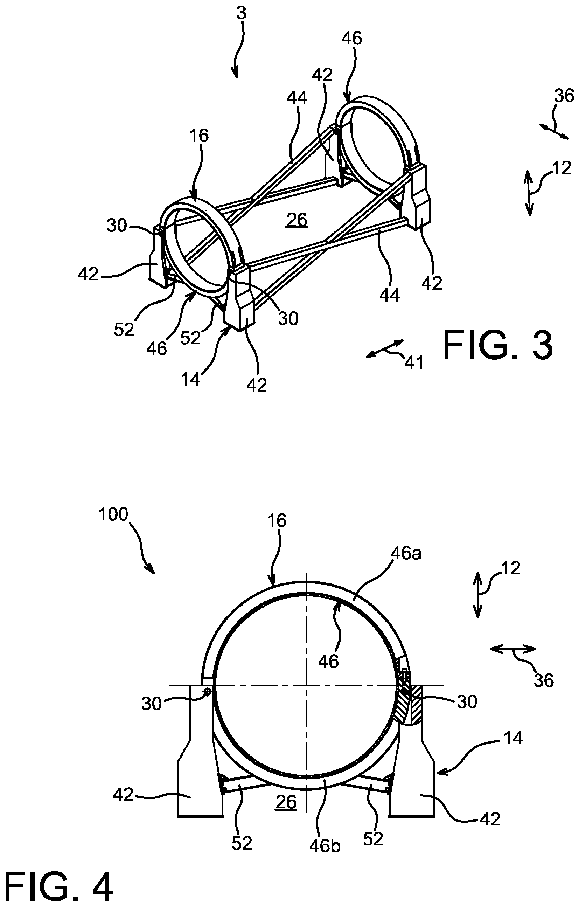

Chacune des deux structures 46 est formée à l'aide de deux parties démontables, s'étendant chacune sur sensiblement 180° en étant de forme semi-circulaire. Comme cela est le mieux visible sur la figure 4, des boulons ou moyens similaires peuvent être utilisés pour assurer la fixation démontable des deux parties semi-circulaires 46a, 46b formant ensemble les structures 46, agencées dans des plans parallèles à la direction 12.

Dans ce mode de réalisation, les montants 42 prennent la forme de rails selon la direction 12. Aussi, les deux structures annulaires 46 entourant le corps 2 sont montées guidées en translation sur ces montants en forme de rails 42. A titre indicatif, pour chacune des deux structures 46, deux montants 42 sont agencés de manière à coopérer avec deux portions diamétralement opposées de la structure concernée, comme cela est le mieux visible sur les figures 3 et 4.

Néanmoins, en conditions normales de transport, les structures annulaires 46 sont maintenues sur les montants 42 par des pions de cisaillement frangibles 30. Aussi, comme cela sera détaillé ci-après, c'est uniquement en cas de rupture de ces pions 30, suite à une chute, que les rails 42 guident en translation les structures 46 selon la première direction 12.

En d'autres termes, la première partie 14 et la seconde partie 16 du châssis 3 sont raccordées entre elles par plusieurs pions de cisaillement frangibles 30, agencés de manière à assurer le maintien des deux parties 14, 16 l'une par rapport à l'autre, selon la première direction 12 de superposition de l'emballage sur le châssis. Pour ce faire, chaque pion fusible 30 traverse un rail 42 ainsi que la partie basse semi-circulaire 46b de la structure annulaire 46.

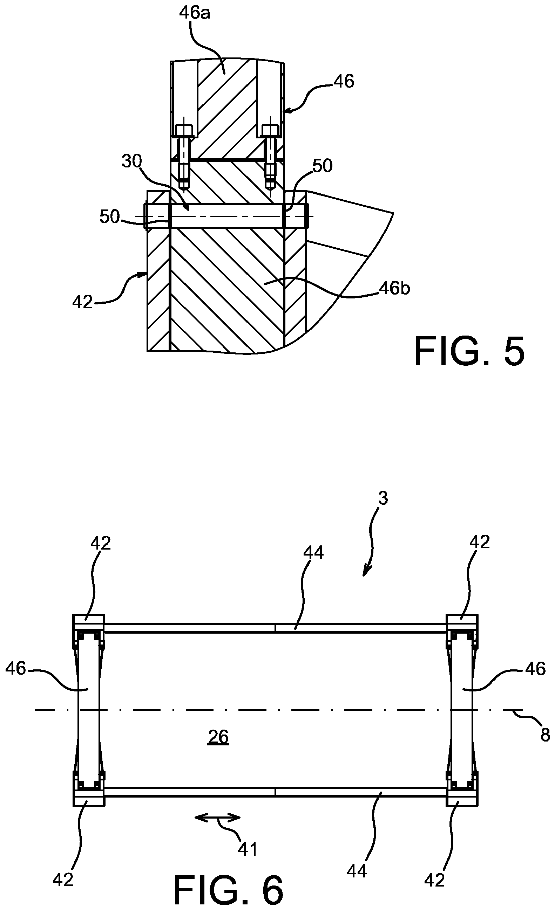

Plus précisément, les deux branches du rail 42 de section en forme de U, ainsi que la partie inférieure 46b logée entre ces deux branches, sont traversées par un pion 30. Au niveau de chacune des deux interfaces entre ces éléments, le pion 30 est équipé d'une gorge 50 formant zone d'amorce de rupture, comme cela est visible sur la figure 5.

Il est noté qu'avec cette conception au sein de laquelle c'est la partie inférieure 46b de chaque structure annulaire 46 qui est reliée aux montants 42, le retrait de l'emballage du châssis s'effectue simplement en démontant les parties supérieures 46a des structures annulaires 46.

L'une des particularités de l'invention réside dans le fait qu'en cas de chute de l'ensemble 100 selon la première direction 12, avec la première partie 14 du châssis orientée vers l'avant, il se produise une rupture des pions frangibles 30 permettant ensuite un déplacement de l'entité 18 relativement à la première partie 14 du châssis, selon cette même première direction 12. Par orientée « vers l'avant », il faut comprendre que lors de la chute selon la première direction, la première partie 14 du châssis se trouve en avant par rapport à l'entité 18. Ainsi, la première partie 14 est celle qui est destinée à impacter en premier la surface d'impact.

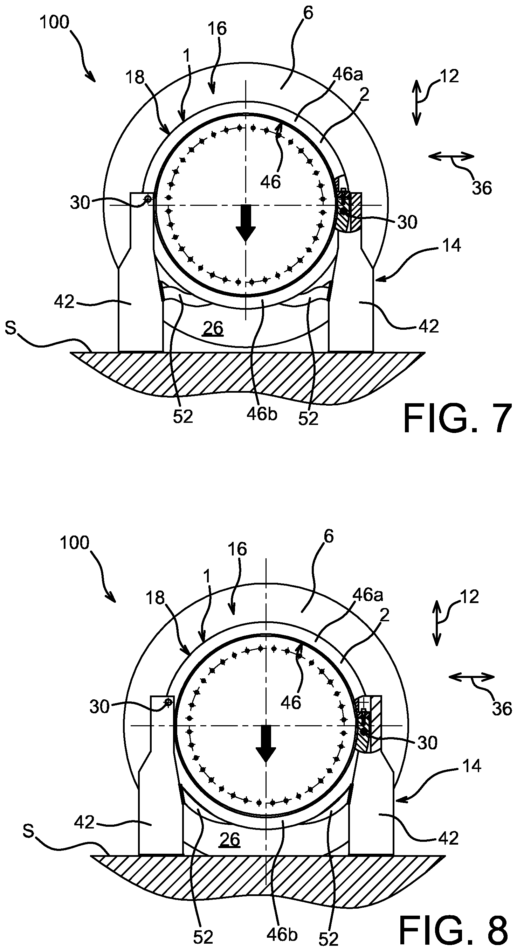

En référence à la figure 7 schématisant ces conditions de chute sur une surface d'impact S plane et orthogonale à la direction 12, il est montré qu'immédiatement après le début de l'impact de la première partie 14 sur la surface S, les pions 30 se cisaillent et entraînent une désolidarisation de l'entité 18 par rapport à cette première partie de châssis 14, selon la première direction 12. Après la rupture, l'entité 18 reste guidée en translation selon la direction 12, relativement à la première partie de châssis 14, grâce à la coopération entre les montants 42 en forme de rails et les structures 46 logées dans ces rails.

En privilégiant cette direction de déplacement relatif, l'entité 18 peut ainsi être guidée à travers l'espace 26, et ne rencontrer aucune gêne lors de ce mouvement. Les risques d'agression de l'emballage par d'autres pièces du châssis sont ainsi considérablement réduits. Néanmoins, sans que cela ne provoque de dégradation de l'emballage, le châssis 3 peut être conçu de sorte qu'après rupture des pions 30, la seconde partie du châssis 16 reste reliée à la première partie du châssis par un ou plusieurs éléments de raccord déformables plastiquement au cours du déplacement relatif. Ces éléments de raccord déformables 52 sont par exemple des poutres sensiblement orientées selon la direction transversale 36, en étant éventuellement légèrement inclinées selon la direction verticale 12. Elles raccordent une partie inférieure de chaque montant 42 à une partie inférieure de la structure annulaire 46 correspondante, comme cela est visible sur la figure 4. Ces poutres 52 contribuent au maintien mécanique de l'entité 18 sur la première partie 14 du châssis, en conditions normales de transport. Elles sont seulement prévues pour se déformer en cas de chute, après rupture des pions de cisaillement.

Comme pour le premier mode de réalisation, le guidage en translation selon la direction 12 est actif dès le début du déplacement relatif entre l'entité 18 et la première partie 14 du châssis après rupture des pions 30, et même actif au cours de la rupture de ces pions frangibles. Il est noté que ce guidage peut être actif tout au long de la chute. Néanmoins, un tel guidage n'est pas nécessairement recherché, et des jeux pourraient ainsi être prévus entre les montants 42 et les structures annulaires 46 logées dans ces montants.

Comme cela est montré sur la figure 7, l'ensemble est conçu de sorte que lors de la chute, ladite rupture des pions 30 se produise avant le contact des capots amortisseurs 6 sur la surface d'impact S, même s'il pourrait en être autrement, sans sortir du cadre de l'invention.

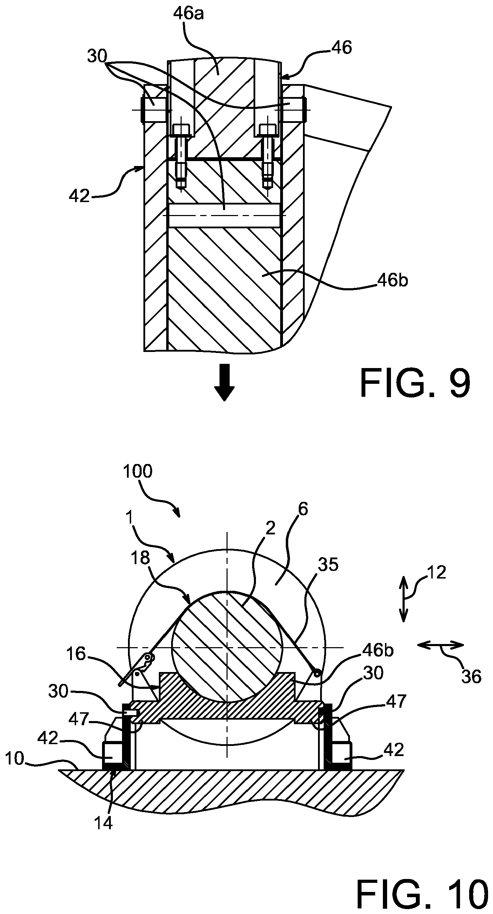

Ensuite, comme cela a été schématisé sur la figure 8, la poursuite de la chute provoque l'entrée en contact des capots 6 avec la surface d'impact S, puis l'écrasement de ces mêmes capots destinés à protéger l'emballage, alors que les structures 46 continuent à être guidées par les montants 42 comme cela a été représenté sur la figure 9.

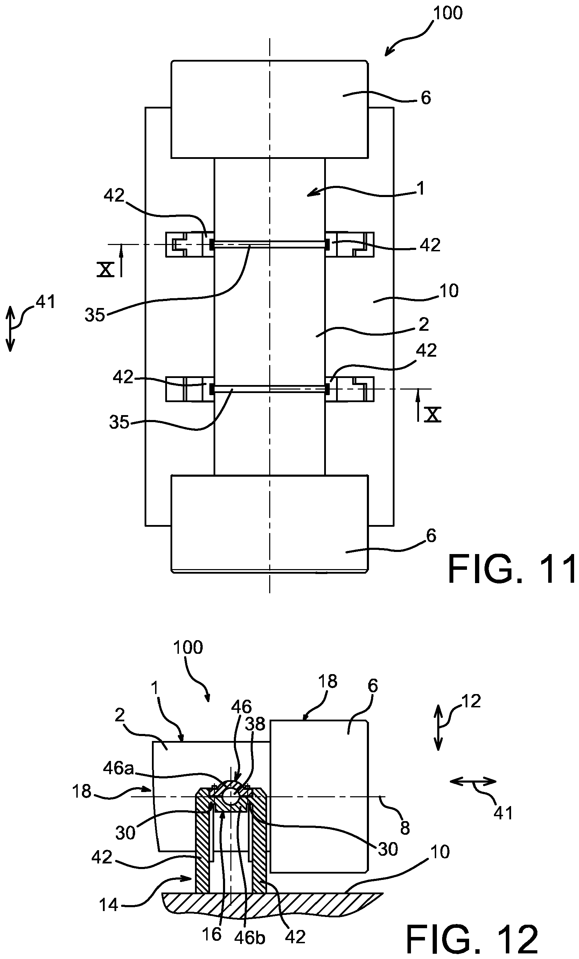

Selon une alternative de réalisation montrée sur les figures 10 et 11, la partie inférieure 46b n'est plus semi-circulaire, mais présente une forme globale en U, avec les branches du U orientées selon la direction 12. De plus, la surface intérieure de support du corps d'emballage reste semi-circulaire.

Dans cette alternative, les branches du U ou des extensions latérales 47 de celles-ci servent au guidage en translation de la seconde partie 16 du châssis relativement à la première partie 14 du châssis, selon la première direction 12, après rupture des pions 30. Dans un exemple non représenté, la longueur des branches des U 46 coopérant avec les rails peut être sensiblement identique ou similaire à celle des montants 42, impliquant un guidage amélioré, même si un tel guidage reste optionnel, sans sortir du cadre de l'invention.

En outre, pour entourer le corps d'emballage 1 en partie supérieure, il peut être prévu une structure équivalente à la partie supérieure 46a montrée sur les figures précédentes, ou bien des moyens du type sangles 35 comme cela a été représenté sur les figures 10 et 11.

Les pions frangibles 30 peuvent être sensiblement de même nature que celle décrite ci-dessus. Par exemple, sur le montant 42 de gauche de la figure 10, il s'agit d'un pion / d'une goupille 30 rapportée entre les deux parties 14, 16 du châssis. Sur le montant de droite, il est représenté un autre exemple dans lequel le pion / la goupille 30 est réalisé d'une seule pièce avec le montant 42, et glissé dans un orifice correspondant de la partie inférieure 46b. Bien évidemment, cet autre exemple est applicable à l'ensemble des modes de réalisation préférés de l'invention.

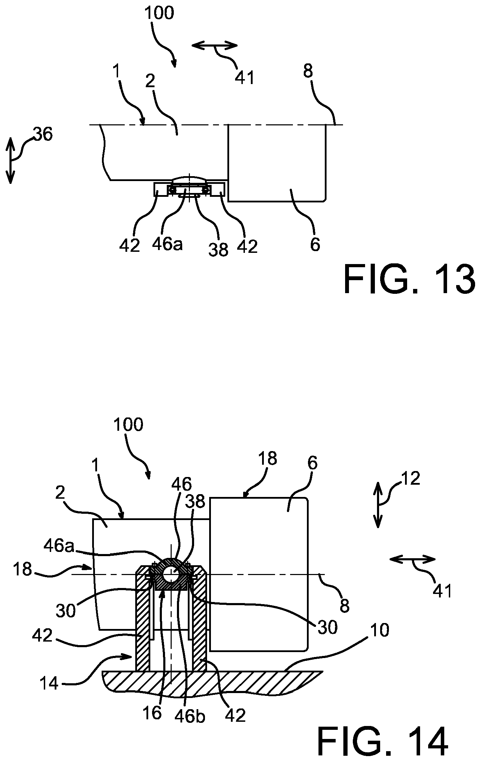

Un autre mode de réalisation préféré est représenté sur les figures 12 et 13. Il contraste avec le mode précédent essentiellement par le fait que les structures annulaires 46 n'entourent plus le corps d'emballage 2, mais les tourillons de manutention 38 en saillie à partir de ce corps. Il est donc prévu autant de structures 46 que de tourillons 38, par exemple quatre formant la seconde partie de châssis 16. Ici aussi, les structures 46 sont reliées à des montants 42 formant la première partie de châssis 14, et ce par des éléments fusibles mécaniques 30. De préférence, une même structure 46 est reliée à deux montants verticaux 42, ces derniers étant alors prévus au nombre de huit.

Dans le mode de réalisation représenté, les montants 42 ne sont pas prévus pour assurer le guidage en translation des structures 46 entourant les tourillons 38, même si une telle fonction pourrait être retenue, sans sortir du cadre de l'invention. De plus, il est noté que la partie inférieure 46b peut présenter une forme globale de U ou encore une forme sensiblement semi-circulaire, également privilégiée pour la partie supérieure 46a.

Ici, les éléments fusibles 30 prennent la forme de ligaments de matière reliant les parties inférieures 46b et les montants 42, le tout étant réalisé d'une seule pièce. Néanmoins, pour ce mode de réalisation, les différentes solutions décrites ci-dessus et intégrant des pions frangibles 30 peuvent être retenues, comme cela est par exemple représenté sur l'alternative de la figure 14, intégrant des pions / goupilles 30 rapportés entre les deux parties 14, 16 du châssis. Pour ce mode de réalisation, le principe de l'invention reste applicable, l'entité 18 formée des quatre structures 46 et de l'emballage 2 se déplaçant relativement à la première partie 14 du châssis formé par les huit montants 42, après rupture des pions / ligaments 30 suite à une chute selon la direction 12.

Bien entendu, diverses modifications peuvent être apportées par l'homme du métier à l'invention qui vient d'être décrite, uniquement à titre d'exemples non limitatifs.

## Revendications

1. Ensemble (100) comprenant un emballage de transport de matières radioactives (1) ainsi qu'un châssis (3) de support de l'emballage, le châssis comporte :
- une première partie (14) ;
- une seconde partie (16) solidaire de l'emballage, l'emballage et cette seconde partie formant une entité (18), caractérisé en ce quel
la première partie et la seconde partie du châssis (14, 16) sont raccordées entre elles par un ou plusieurs éléments fusibles mécaniques (30) de manière à assurer le maintien de l'une par rapport à l'autre selon une première direction de superposition (12) de l'emballage sur son châssis, et le châssis est conçu de manière à ce qu'une chute de l'ensemble selon ladite première direction (12) avec la première partie (14) du châssis orientée vers l'avant selon cette première direction, entraîne une rupture desdits éléments fusibles mécaniques (30) permettant un déplacement de ladite entité (18) relativement à ladite première partie (14), selon ladite première direction (12).

2. Ensemble selon la revendication 1, **caractérisé en ce que** les première et seconde parties (14, 16) du châssis sont équipées de moyens de guidage (42, 46b) permettant, au moins pendant une partie dudit déplacement relatif, de guider ladite entité (18) relativement à la première partie (14) selon ladite première direction (12).

3. Ensemble selon l'une quelconque des revendications précédentes, **caractérisé en ce que** ledit emballage (1) comporte des moyens amortisseurs (6), de préférence des capots amortisseurs agencés aux extrémités de l'emballage, et **en ce qu'**il est conçu de sorte que lors de ladite chute sur une surface d'impact plane (S) orthogonale à ladite première direction (12), ladite rupture de chaque élément fusible mécanique se produise avant le contact des moyens amortisseurs (6) avec la surface d'impact.

4. Ensemble selon l'une quelconque des revendications précédentes, **caractérisé en ce que** chaque élément fusible mécanique (30) prend la forme d'un organe de cisaillement, de préférence équipé d'une portion affaiblie mécaniquement (50).

5. Ensemble selon l'une quelconque des revendications précédentes, **caractérisé en ce qu'**il est conçu de sorte qu'après rupture de chaque élément fusible mécanique (30), ladite entité (18) est libre relativement à la première partie (14) du châssis (3).

6. Ensemble selon l'une quelconque des revendications 1 à 4, **caractérisé en ce qu'**il est conçu de sorte qu'après rupture de chaque élément fusible mécanique (30), ladite entité (18) reste reliée à la première partie (14) du châssis par un ou plusieurs éléments de raccord déformables plastiquement (52), au cours dudit déplacement relatif.

7. Ensemble selon l'une quelconque des revendications précédentes, **caractérisé en ce que** ladite première partie du châssis (14) comporte des montants (42), de préférence en forme de rails et s'étendant de préférence longitudinalement selon ladite première direction (12).

8. Ensemble selon l'une quelconque des revendications précédentes, **caractérisé en ce que** ladite seconde partie de châssis (16) comporte deux structures (46), de préférence annulaires, entourant un corps (2) de l'emballage.

9. Ensemble selon la revendication 8, **caractérisé en ce que** chaque structure (46) est formée à l'aide de deux parties démontables (46a, 46b), s'étendant chacune sur sensiblement 180°.

10. Ensemble selon la revendication 8 ou la revendication 9, **caractérisé en ce que** les deux structures (46) sont montées guidées en translation selon ladite première direction (12) sur lesdits montants en forme de rails (42), le maintien des deux structures sur lesdits montants étant assuré par les éléments fusibles mécaniques (30).

11. Véhicule (20) de transport de matières radioactives équipé d'un ensemble (100) selon l'une quelconque des revendications précédentes, le véhicule comprenant une plateforme (10) de fixation de l'ensemble (100) superposé sur ladite plateforme selon ladite première direction (12), avec la première partie (14) du châssis (3) fixée sur ladite plateforme (10).

## Patentansprüche

1. Anordnung (100), umfassend eine Verpackung zum Transport von radioaktiven Stoffen (1) sowie ein Chassis (3) zur Unterstützung der Verpackung,
wobei das Chassis umfasst:
- einen ersten Teil (14);
- einen zweiten Teil (16), der mit der Verpackung fest verbunden ist, wobei die Verpackung und dieser zweite Teil eine Einheit (18) bilden;
**dadurch gekennzeichnet, dass**
der erste Teil und der zweite Teil des Chassis (14, 16) miteinander durch ein oder mehrere mechanische Sicherungselemente (30) verbunden sind, um den gegenseitigen Halt in einer ersten Richtung (12) der Überlagerung der Verpackung auf ihrem Chassis zu gewährleisten,
und das Chassis derart ausgelegt ist, dass ein Fall der Anordnung in der ersten Richtung (12), wobei der erste Teil (14) des Chassis zur Vorderseite in dieser ersten Richtung ausgerichtet ist, einen Bruch der mechanischen Sicherungselemente (30) nach sich zieht, wobei eine Verschiebung der Einheit (18) relativ zu dem ersten Teil (14) in der ersten Richtung (12) gestattet wird.

2. Anordnung nach Anspruch 1, **dadurch gekennzeichnet, dass** der erste und zweite Teil (14, 16) des Chassis mit Führungsmitteln (42, 46b) ausgestattet sind, die es gestatten, mindestens während eines Teils der relativen Verschiebung, die Einheit (18) relativ zu dem ersten Teil (14) in der ersten Richtung (12) zu führen.

3. Anordnung nach einem der vorhergehenden Ansprüche, **dadurch gekennzeichnet, dass** die Verpackung (1) Dämpfungsmittel (6), bevorzugt Dämpfungshauben, umfasst, die an den Enden der Verpackung angeordnet sind, und dadurch, dass diese derart ausgelegt ist, dass bei einem Fall auf eine ebene Aufprallfläche orthogonal zur ersten Richtung (12) der Bruch jedes mechanischen Sicherungselements vor dem Kontakt der Dämpfungsmittel (6) mit der Aufprallfläche erfolgt.

4. Anordnung nach einem der vorhergehenden Ansprüche, **dadurch gekennzeichnet, dass** jedes mechanische Sicherungselement (30) die Form eines Scherelements annimmt, das bevorzugt mit einem mechanisch geschwächten Abschnitt (50) ausgestattet ist.

5. Anordnung nach einem der vorhergehenden Ansprüche, **dadurch gekennzeichnet, dass** diese derart ausgelegt ist, dass nach dem Bruch jedes mechanischen Sicherungselements (30) die Einheit (18) relativ zu dem ersten Teil (14) des Chassis (3) frei ist.

6. Anordnung nach einem der Ansprüche 1 bis 4, **dadurch gekennzeichnet, dass** diese derart ausgelegt ist, dass nach dem Bruch jedes mechanischen Sicherungselements (30) die Einheit (18) mit dem ersten Teil (14) des Chassis durch ein oder mehrere plastisch verformbare Elemente (52) während der relativen Verschiebung verbunden bleibt.

7. Anordnung nach einem der vorhergehenden Ansprüche, **dadurch gekennzeichnet, dass** der erste Teil des Chassis (14) Pfosten (42), bevorzugt in Form von Schienen und die sich bevorzugt in Längsrichtung entlang der ersten Richtung (12) erstrecken, umfasst.

8. Anordnung nach einem der vorhergehenden Ansprüche, **dadurch gekennzeichnet, dass** der zweite Teil (16) des Chassis zwei Strukturen (46), bevorzugt ringförmig, umfasst, die den Körper (2) der Verpackung umgeben.

9. Anordnung nach Anspruch 8, **dadurch gekennzeichnet, dass** jede Struktur (46) mit Hilfe von zwei abnehmbaren Teilen (46a, 46b) gebildet ist, die sich jeweils im Wesentlichen über 180° erstrecken.

10. Anordnung nach Anspruch 8 oder Anspruch 9, **dadurch gekennzeichnet, dass** die beiden Strukturen (46), geführt in Translation in der ersten Richtung (12), an den Pfosten in Form von Schienen (42) montiert sind, wobei der Halt der beiden Strukturen an den Pfosten durch die mechanischen Sicherungselemente (30) gesichert wird.

11. Fahrzeug (20) zum Transport radioaktiver Stoffe, welches mit einer Anordnung (100) nach einem der vorhergehenden Ansprüche ausgestattet ist, wobei das Fahrzeug eine Plattform (10) zur Befestigung der Anordnung (100) umfasst, die über die Plattform in der ersten Richtung (12) gelegt ist, wobei der erste Teil (14) des Chassis (3) an der Plattform (10) befestigt ist.

## Claims

1. Assembly (100) including a package for transport of radioactive materials (1) and a package support frame (3),
the frame includes:
- a first portion (14);
- a second portion (16) which is rigidly attached to the package, wherein the package and this second portion form an entity (18),
**characterised in that** the first portion and the second portion of the frame (14, 16) are connected to one another by one or more mechanical fusible elements (30) to hold one relative to the other in a first direction of superposition (12) of the package on its frame,
and the frame is configured so that a fall of the assembly in said first direction (12) with the first portion (14) of the frame pointing forwards in this first direction causes a rupture of said mechanical fusible elements (30) allowing said entity (18) to move relative to said first portion (14), in said first direction (12).

2. Assembly according to claim 1, **characterised in that** the first and second portions (14, 16) of the frame comprise guidance means (42, 46b) allowing said entity (18) to be guided, at least during a part of said relative movement, relative to the first portion (14) in said first direction (12).

3. Assembly according to any one of the previous claims, **characterised in that** said package (1) includes shock-absorbing means (6), preferably shock-absorbing caps fitted at the ends of the package, and **in that** it is configured so that during said fall on a flat impact surface (S) orthogonal to said first direction (12), said rupture of each mechanical fusible element occurs before contact of the shock-absorbing means (6) with the impact surface.

4. Assembly according to any one of the previous claims, **characterised in that** each mechanical fusible element (30) takes the form of a shearing device, preferably having a mechanically weakened portion (50).

5. Assembly according to any one of the previous claims, **characterised in that** it is configured so that after rupture of each mechanical fusible element (30), said entity (18) is free relative to the first portion (14) of the frame (3).

6. Assembly according to any one of claims 1 to 4, **characterised in that** it is configured so that after rupture of each mechanical fusible element (30), said entity (18) remains connected to the first portion (14) of the frame by one or more plastically deformable connecting elements (52), during said relative movement.

7. Assembly according to any one of the previous claims, **characterised in that** said first portion of the frame (14) includes uprights (42), preferably in the form of rails, extending preferably longitudinally in said first direction (12).

8. Assembly according to any one of the previous claims, **characterised in that** the second frame portion (16) includes two structures (46), preferably annular structures, surrounding a body (2) of the package.

9. Assembly according to claim 8, **characterised in that** each structure (46) is formed using two portions that may be disassembled (46a, 46b), each extending over roughly 180°.

10. Assembly according to claim 8 or claim 9, **characterised in that** the two structures (46) are installed by sliding in a guided manner in said first direction (12) on said uprights in the form of rails (42) wherein the two structures are held on said uprights by the mechanical fusible elements (30).

11. Vehicle (20) for transporting radioactive materials, comprising the assembly (100) according to any one of the previous claims, wherein the vehicle includes a platform (10) for attaching the assembly (100) superposed on said platform in said first direction (12), with the first portion (14) of the frame (3) attached to said platform (10).
